# EUROPÄISCHE PATENTSCHRIFT

(11) **EP 1 252 823 B1**
(45) Veröffentlichungstag und Bekanntmachung des Hinweises auf die Patenterteilung: **07.01.2004**
(21) Anmeldenummer: 02090143.5
(22) Anmeldetag: 16.04.2002
(51) Int. Cl.: A22C 25/08

(54) **Vorrichtung zum Aufrichten und/oder Führen von Flossen, insbesondere Brustflossen, in Fischbe- bzw. Verarbeitungsmaschinen sowie Verfahren hierzu**
Device and method for erecting and/or guiding fish fins, in particular ventral fins
Dispositif et procédé pour le redressage et/ou le guidage des nageoires des poissons, en particulier des nageoires pectorales

(30) Priorität: 26.04.2001 DE 10121100
(43) Veröffentlichungstag der Anmeldung: 30.10.2002
(73) Patentinhaber: NORDISCHER MASCHINENBAU RUD. BAADER GMBH + CO KG, 23560 Lübeck (DE)
(72) Erfinder: Schwerdtfeger, Bernd, 23556 Lübeck (DE)
(74) Vertreter: Patentanwälte Wenzel & Kalkoff

(56) Entgegenhaltungen:
- DE-U- 20 008 828
- US-A- 4 321 729
- US-A- 5 462 478

## Beschreibung

Die Erfindung betrifft eine Vorrichtung zum Aufrichten und/oder Führen von Flossen, insbesondere Brustflossen, in Fischbe- bzw. verarbeitungsmaschinen, in denen die Fische im wesentlichen quer zu ihrer Längserstreckung und seitlich in einer Mulde liegend transportiert werden, umfassend Mittel zum Lösen und/oder Anheben der Brustflossen vom Fischkörper, derart, daß die Brustflossen für eine nachfolgende Positionierung und Führung mittels der Wurzeln der Brustflossen aufrichtbar sind.

Des weiteren befaßt sich die Erfindung mit einem Verfahren zum Aufrichten und/oder Führen von Flossen, insbesondere Brustflossen, als Vorbereitung zur nachfolgenden Fischbe- bzw. verarbeitung, wobei die Fische in entsprechenden Mulden auf der Seite liegend im wesentlichen quer zu ihrer Längserstreckung transportiert werden.

Aus US 4 321729A ist eine Vorrichtung und ein Verfahren entsprechend dem Oberbegriff der Unabhängigen Ansprüche bekannt.

In der Fischbe- bzw. verarbeitung ist es erforderlich, daß die Brustflossen, die üblicherweise eng am Fischkörper anliegen, aufgerichtet werden, bevor die Fischkörper der endgültigen Be- bzw. Verarbeitung zugeführt werden. Die Fischkörper werden nämlich in der Regel mittels der Wurzeln der Brustflossen in ihrer Längsrichtung positioniert und fixiert, um die Brustflossen zur anschließenden Führung zu verwenden, wobei die Wurzeln als Anschlag dienen. Hierzu müssen die Brustflossen derart angehoben bzw. aufgerichtet werden, daß sie nicht unter den Mitteln zum Aufrichten hindurchrutschen bzw. durch diese niedergedrückt sondern so aufgerichtet werden, daß die Brustflossen mit ihren Wurzeln gegen einen Anschlag gedrückt werden können.

Bekannte Vorrichtungen der gattungsgemäßen Art verfügen über Bürsten, mit denen die Brustflossen vom Fischkörper gelöst und aufgerichtet werden. Diese sind im Bereich der Fischzuführung der Fischverarbeitungsmaschinen angeordnet, und zwar derart, daß sie dicht oberhalb und unterhalb der Transportebene bzw. der Ebene der Fischmulden liegen, so daß der Fischkörper bzw. die Brustflossen erfaßt werden können. Nachteil der bekannten Vorrichtung ist jedoch zum einen, daß die Bürsten eine hohe Belastung auf den Fischkörper ausüben bzw. eine hohe Reibung zwischen den Bürsten und dem Fischkörper besteht, was zum Verdrehen des Fischkörpers in der Mulde führen kann. Dies führt wiederum zu fehlerhafter Positionierung. Zum anderen können tief liegende Brustflossen nicht erreicht werden, da die Bürsten in einem Abstand zueinander angeordnet sein müssen, um eine ausreichend große Öffnung zum Transport der Fischkörper durch die Bürsten zu schaffen. Anderenfalls würden die Bürsten den Transport der Fischkörper behindern. Die fest eingestellten Bürsten bieten bei Fischen unterschiedlicher Größe und Qualität nur unzureichende Sicherheit für das Aufrichten der Brustflossen, da insbesondere kleinere Fische bzw. die relevanten Bereiche der Fische mit den Bürsten gar nicht in Berührung kommen.

Der Erfindung liegt damit die Aufgabe zugrunde, eine Vorrichtung zu schaffen, die ein zuverlässiges und schonendes Aufrichten der Brustflossen ermöglicht, und zwar unabhängig von der Fischart und deren Beschaffenheit. Des weiteren ist es Aufgabe der Erfindung, ein Verfahren zum zuverlässigen Aufrichten von Brustflossen vorzuschlagen.

Die der Erfindung zugrunde liegende Aufgabe wird erfindungsgemäß zusammen mit den Merkmalen des Oberbegriffs des Anspruchs 1 dadurch gelöst, daß das Mittel aus mindestens einer Rolle gebildet ist, die die Fischkontur in Transportrichtung abfährt. Dadurch wird gewährleistet, daß die Brustflossen der Fische unabhängig von ihrer Größe und Beschaffenheit erfaßbar sind und zuverlässig aufgerichtet werden können. Das "Abtasten" des jeweils zugeführten Fischkörpers stellt sicher, daß auch Brustflossen, die tiefer liegend angeordnet sind, erfaßt und aufgerichtet werden.

In einer bevorzugten Weiterbildung der Erfindung ist das Mittel aus einem Rollenpaar oberhalb des Fischkörpers und einer einzelnen Rolle unterhalb des Fischkörpers gebildet. Dadurch wird ein noch zuverlässigeres Aufrichten der Brustflossen sichergestellt, zumal die Brustflossen zu beiden Seiten des Fischkörpers erfaßt werden können, so daß ein Verkanten oder dergleichen durch lediglich einseitiges Anliegen der Wurzeln der Brustflossen am Anschlag verhindert wird.

Vorteilhafterweise sind die Rollen an einem Hebelarm drehbar angeordnet. Durch das Drehen der Rollen wird der Vorgang des Aufrichtens noch unterstützt.

In einer bevorzugten Ausführungsform sind die Rollen über den gesamten Umfang im Randbereich scharfkantig ausgebildet. Die Kante erleichtert das Eingreifen zwischen dem Fischkörper und der Brustflosse, wodurch die Zuverlässigkeit nochmals gesteigert werden kann.

Bevorzugterweise sind die Rollen schräg zum Fischkörper angeordnet, derart, daß die durch die Rollen aufgespannte Ebene senkrecht zur Transportebene und schräg zur Längsachse des Fisches steht. Durch diese Schrägstellung wird das "Einfädeln" der Brustflossen in die bzw. an die Rollen unterstützt. Dies führt wiederum dazu, daß das Aufrichten vereinfacht ist.

Des weiteren wird die Aufgabe durch ein Verfahren gelöst, bei dem die Brustflossen der Fische vor der eigentlichen Bearbeitung durch mindestens einer Rolle vom Fischkörper gelöst und aufgerichtet werden, indem die Rolle die Kontur der Fischkörper in Transportrichtung abfährt. Durch das Abfahren der Kontur der Fische mittels der Rollen wird sichergestellt, daß die Brustflossen unabhängig von der Fischgröße und der Beschaffenheit derselben sowie von der Position der Brustflossen zuverlässig erfaßt und aufgerichtet werden.

In einer bevorzugten Ausführung des Verfahrens werden die Rollen durch die Bewegung des Fisches angetrieben. Dadurch wird die Aufrichtbewegung der Brustflossen unterstützt.

Weitere Merkmale der Erfindung ergeben sich aus den Unteransprüchen sowie der Beschreibung. Besonders bevorzugte Ausführungsformen werden anhand der Zeichnung näher erläutert. In der Zeichnung zeigt:
- Fig. 1: eine Seitenansicht eines an einem Hebelarm befestigten Rollenpaares, daß oberhalb des Fischkörpers angeordnet ist,
- Fig. 2: eine Draufsicht auf das Rollenpaar gemäß Figur 1 mit einem Fischkörper,

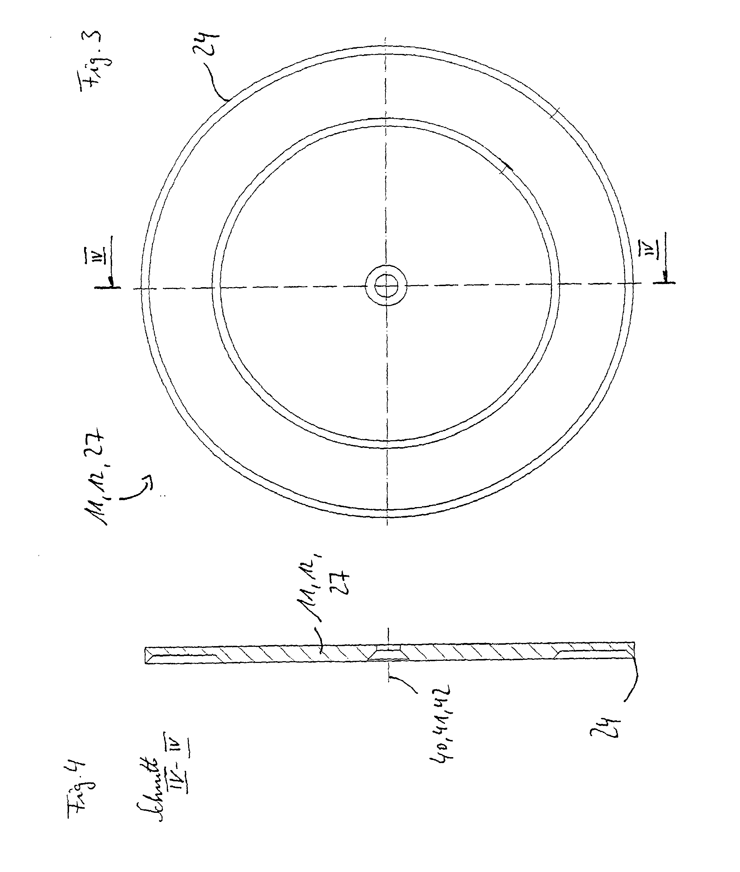

- Fig. 3: eine Vorderansicht einer einzelnen Rolle,
- Fig. 4: eine Seitenansicht der Rolle gemäß Figur 3 im Schnitt IV-IV,

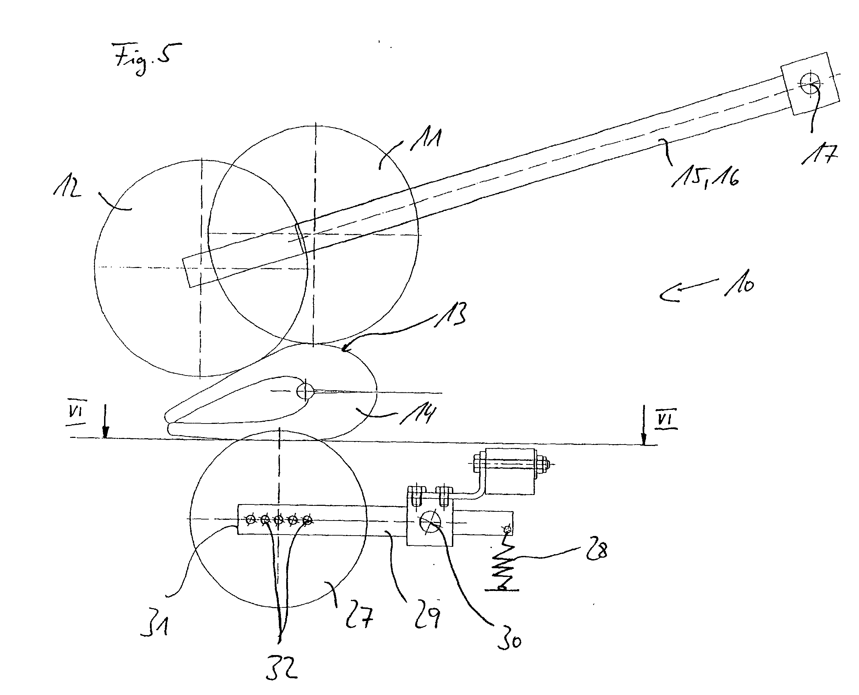

- Fig. 5: eine weitere Ausführungsform der Erfindung, nämlich eine Anordnung mit einem Rollenpaare oberhalb und einer einzelnen Rolle unterhalb des Fischkörpers, und

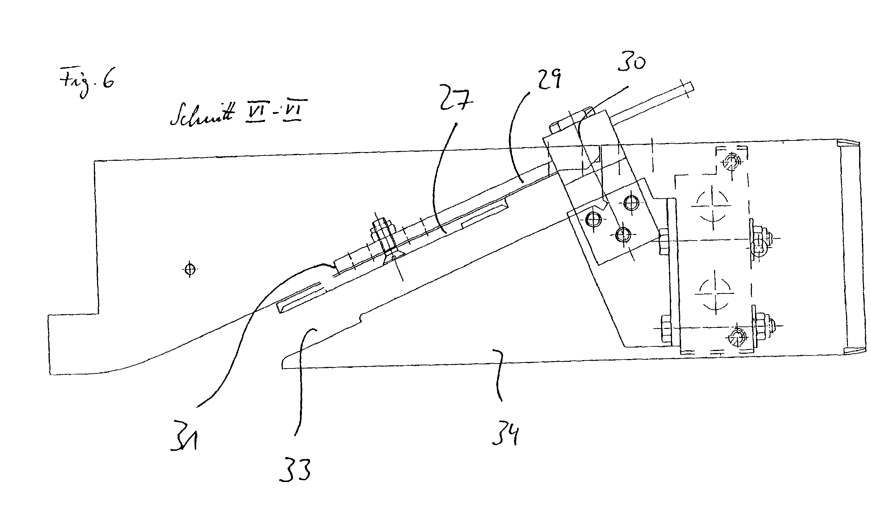

- Fig. 6: eine Draufsicht auf die untere Rollenanordnung im Schnitt VI-VI gemäß Figur 5.

Vorrichtungen der dargestellten Art dienen bei vielen Maschinen in der Fischindustrie dazu, die Brustflosse bzw. die Kragenknochenflosse aufzurichten, so daß diese für die nachfolgende Bearbeitung zur Führung verwendet werden kann. Hierzu liegen die Fische seitlich in Mulden, wobei der Bauch in Transportrichtung der Fische zeigt. Die Mulden bilden die im wesentlichen horizontal verlaufende Transportebene.

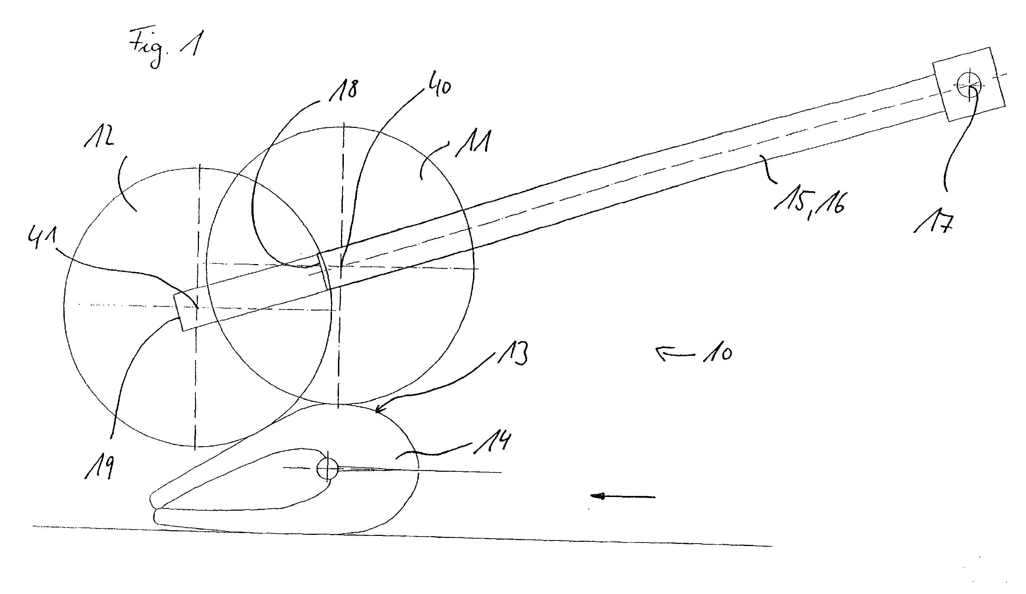

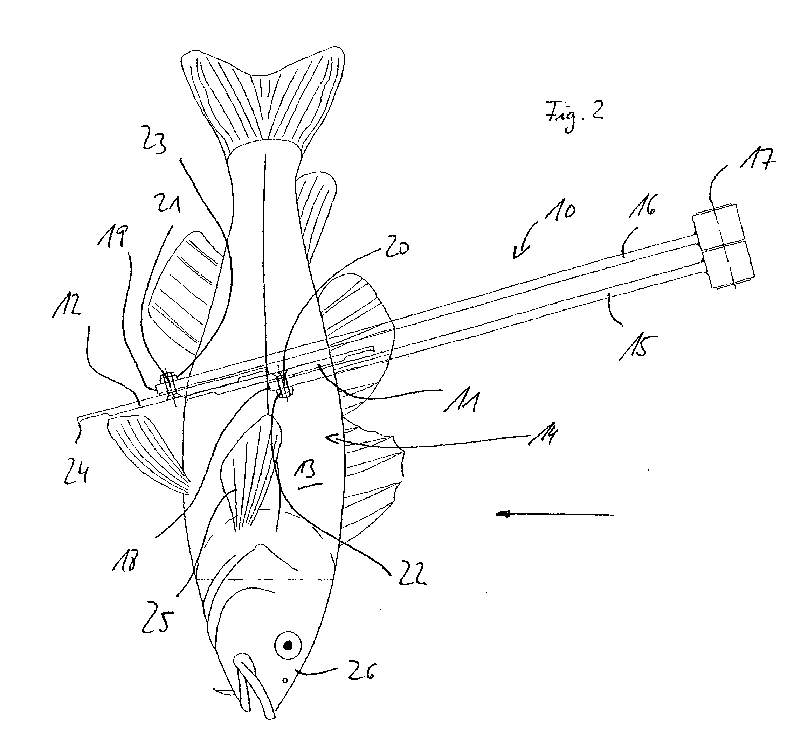

Die Vorrichtung 10 gemäß Figur 1 zeigt zwei Rollen 11 und 12, die auf der Oberseite 13 eines auf der Seite liegenden Fischkörpers 14 aufliegen. Jede Rolle 11, 12 ist an einem separaten Hebelarm 15 bzw. 16 angeordnet. Die Rollen 11, 12 sind drehbar an dem jeweiligen Hebelarm 15, 16 befestigt, so daß sie durch die in Transportrichtung (siehe Pfeil in Fig. 1) bewegten Fischkörper 14 angetrieben werden. Die Hebelarme 15, 16 sind um einen gemeinsamen Schwenkpunkt 17 schwenkbar. Die Hebelarme 15 und 16 sind versetzt zueinander angeordnet, derart, daß sie in Längsrichtung des Fischkörpers 14 vom Kopf aus betrachtet hintereinander liegen (siehe auch Figur 2). Der hintere Hebelarm 16 ist auch länger ausgebildet, so daß die Rolle 12 in Transportrichtung des Fischkörpers 14 hinter der Rolle 11 am Hebelarm 15 liegt, wobei sich die Rollen 11, 12 mindestens teilweise überlappen.

Die einstückig ausgebildeten Hebelarme 15, 16 liegen durch ihr Eigengewicht aufgrund der Schwerkraft mit den Rollen 11, 12 auf dem Fischkörper 14 auf. Die an freien Enden 18, 19 der Hebelarme 15, 16 angeordneten Rollen 11, 12. deren Drehachsen 40, 41 sich im wesentlichen parallel zur Längsachse des Fisches erstrecken, sind lösbar an den Hebelarmen 15, 16 befestigt. Im gezeigten Ausführungsbeispiel gemäß Figur 2 sind die Rollen 11, 12 mittels Schrauben 20, 21 und korrespondierenden Muttern 22, 23 befestigt. Es sind jedoch auch andere herkömmliche Befestigungsmittel verwendbar.

Jede Rolle 11, 12 ist scheibenartig ausgebildet und weist über den gesamten Umfang im Randbereich eine scharfe Kante 24 auf. Diese Kante 24 verläuft rampenartig nach innen (siehe insbesondere Figur 4), so daß Brustflossen 25 erfaßt und durch die Rotation der Rollen 11, 12 quasi nach oben in eine aufgerichtete Position gezogen werden. Hierzu sind die Rollen 11, 12 schräg zur Transportrichtung der Fischkörper 14 gestellt (siehe Figur 2). Mit anderen Worten stehen die durch die Rollen 11, 12 aufgespannten Ebenen senkrecht zur Transportebene und schräg zur Längsachse des Fischkörpers 14. In der Ursprungsposition der Vorrichtung 10, also zum Zeitpunkt der Zuführung der Fischkörper in den Bereich der Vorrichtung 10, liegen die Rollen 11, 12 vom Kopf 26 des Fisches aus gesehen hinter den Brustflossen 25, so daß zuverlässig gewährleistet ist, daß die Brustflossen 25 im weiteren Verlauf "gefangen" werden.

Um die Brustflossen 25 auf beiden Seiten des Fischkörpers 14 aufrichten zu können, weist die Vorrichtung 10 auf der Oberseite des Fischkörpers 14 die Rollen 11, 12 und auf der Unterseite eine Rolle 27 auf. Gemäß einer weiteren Ausführungsform kann die Vorrichtung 10 auch aus zwei Rollenpaaren gebildet sein, wobei ein Rollenpaar oberhalb und das andere Rollenpaar unterhalb des Fischkörpers 14 angeordnet ist. Auch einzelne Rollen oberhalb und unterhalb des Fischkörpers 14 sind einsetzbar. Bei den genannten Vorrichtungen ist mindestens die oder jede Rolle 27, die unterhalb des Fischkörpers 14 angeordnet ist, federbelastet, so daß die Rollen an dem Fischkörper 14 anliegen und die Kontur von beiden Seiten quasi abgefahren werden kann. Die oder jede Rolle 27 ist mit einer Zugfeder 28 belastet, so daß die Rolle 27 grundsätzlich im Bereich der Transportebene angeordnet ist. Mit anderen Worten bedeutet dies, daß die Rolle 27 von unten durch einen Spalt 33 in der die Transportebene bildenden Abdeckung 34 durch die Transportebene ragt und erst durch den Fischkörper 14 nach unten ausgelenkt wird. Ein (nicht dargestellter) Anschlag verhindert, daß die Rolle 27 zu weit nach oben gedrückt bzw. gezogen wird. Die Rolle 27 ist ebenfalls an einem Hebelarm 29 drehbar angeordnet. Die Drehachse 42 der Rolle 27 erstreckt sich wie die Drehachsen 40, 41 der Rollen 11, 12 im wesentlichen parallel zur Längsachse des Fisches. Der Hebelarm 29 selbst ist um einen Schwenkpunkt 30 schwenkbar. Am freien Ende 31 des Hebelarmes 29 sind mehrere Aufnahmen 32 ausgebildet. Dadurch ist die Position der Rolle 27 in Abhängigkeit beispielsweise der Fischgröße voreinstellbar. Diese Art der Einstellung ist auch bei den Rollen 11, 12 auf der Oberseite gewährleistet. Im übrigen ist die Rolle 27 genauso aufgebaut wie die Rollen 11, 12. In einem nicht weiter ausgeführten Beispiel kann auch unterhalb des Fischkörpers 14 eine zweite Rolle vorgesehen sein. Auch der Einsatz weiterer Rollen ist vorstellbar. Es ist allerdings auch möglich, daß sämtliche Rollen federbelastet sind. Sämtliche Rollen können auch angetrieben sein, beispielsweise durch einen Elektromotor. Es ist auch vorstellbar, daß die Rollen zur Steuerung und/oder Regelung nachfolgender Bearbeitungsschritte eingesetzt werden, da mittels der Rollen relevante Daten beispielsweise zur Fischgröße erfaßbar sind.

Das Verfahren zum Aufrichten der Brustflossen 25 wird im folgenden näher beschrieben:

Die Fische werden auf der Seite liegend, Bauch voraus in Mulden der Fischbe- bzw. - verarbeitungsmaschine zugeführt. Um die Fische für die Bearbeitung ausrichten und positionieren zu können, werden üblicherweise die Brustflossen 25 bzw. die Kragenknochenflossen verwendet. Hierzu müssen diese jedoch aus ihrer am Fischkörper 14 anliegenden Position aufgerichtet werden, damit die Fische in Schwanzrichtung, beispielsweise durch einen Kopfschieber, bewegt werden können, so daß die Fische mit ihren Brustflossenwurzeln gegen einen Anschlag in ihre Endposition/Bearbeitungsstation gedrückt werden können. Das Aufrichten der Brustflossen 25 erfolgt mittels der Rollen 11, 12, 27, wobei die Rollen 11, 12, 27 mit ihrer scharfen Kante 24 die Brustflossen 25 erfassen und diese an den Rollen 11, 12, 27 aufgerichtet werden. Die Fischkörper 14 laufen zwischen den oberhalb und unterhalb der Fischkörper 14 angeordneten Rollen 11, 12, 27 entlang. Bevor die Fischkörper 14 in den Bereich der Rollen 11, 12, 27 gelangen, liegen die oberen Rollen 11, 12 in der Transportebene bzw. auf der Ebene der Fischmulden auf. Die untere Rolle 27 wird durch die Federspannung der Zugfeder 28 in einer Position gehalten, so daß sie ebenfalls in der Transportebene liegt bzw. von unten durch die Transportebene bzw. die Ebene der Fischmulden ragt. Dadurch wird sichergestellt, daß die Rollen 11, 12, 27 die Kontur des Fisches zu beiden Seiten vollständig abfahren, so daß auch Brustflossen 25, die an einer tieferen Stelle des Fischkörpers 14 liegen, erfaßt werden. Die Position der Rollen 11, 12, 27 während des Aufrichtvorganges wird demnach von den Fischkörpern 14 selbst bestimmt. Die Rollen 11, 12, 27 werden durch den Fischkörper 14 nach oben bzw. nach unten ausgelenkt.

Die schräg zur Transportrichtung gestellten Rollen 11, 12, 27, die beim Aufsetzen auf den Fisch vom Kopf 26 aus gesehen hinter den Brustflossen 25 liegen, erfassen die durch eine Bewegung in Schwanzrichtung in den Bereich der Rollen 11, 12, 27 gelangten Brustflossen 25 mit der scharfen Kante 24, die zwischen der Brustflosse 25 und dem Fischkörper 14 eingreift und stellen sicher, daß alle Brustflossen 25 erfaßt werden. Das "Einfädeln" kann durch eine weitere, dann überlagerte Schubbewegung des Fisches in Schwanzrichtung noch unterstützt werden. Durch die Transportbewegung der Fische werden die Rollen 11, 12, 27 durch den Fischkörper 14 angetrieben, so daß die insbesondere durch Feuchtigkeit am Fischkörper 14 haftenden Brustflossen 25 angehobenen und durch die Drehbewegung der Rollen 11, 12, 27 vollständig aufgerichtet werden, ohne die Fische in ihrer Position zu verändern. Mit anderen Worten werden die Rollen 11, 12, 27 an den Hebelarmen 15, 16 so über den Fisch geführt, daß die Rollen 11, 12, 27 mittels der scharfen Kante 24 die Brustflossen 25 erfassen und diese an den Rollen 11, 12, 27 aufgerichtet werden.

Die Position der Fischkörper 14 zu den Rollen 11, 12, 27, nämlich die schräge Stellung der Rollen 11, 12, 27, kann auch dadurch erreicht werden, daß die Rollen 11, 12, 27 parallel zur Transportrichtung ausgerichtet sind und die Fischkörper 14 in den Fischmulden schräg zugeführt werden. Auch eine Kombination der genannten Möglichkeiten ist einsetzbar.

Sobald die Brustflossen angehoben sind, wird durch eine Schubbewegung der Fische in Schwanzrichtung die endgültige Position erreicht, indem die Brustflossenwurzeln an den entsprechenden Anschlägen anliegen. In dieser Position werden die Fischkörper 14 an nachfolgende Führungen übergeben.

## Patentansprüche

1. Vorrichtung zum Aufrichten und/oder Führen von Flossen, insbesondere Brustflossen (25), in Fischbe- bzw. verarbeitungsmaschinen, in denen die Fische im wesentlichen quer zu ihrer Längserstreckung und seitlich in einer Mulde liegend transportiert werden, umfassend Mittel zum Lösen und/oder Anheben der Brustflossen (25) vom Fischkörper (14), derart, daß die Brustflossen (25) für eine nachfolgende Positionierung und Führung mittels der Wurzeln der Brustflossen (25) aufrichtbar sind, **dadurch gekennzeichnet, daß** das Mittel aus mindestens einer Rolle (11, 12, 27) gebildet ist, die die Fischkontur in Transportrichtung abfährt.

2. Vorrichtung nach Anspruch 1, **dadurch gekennzeichnet, daß** oberhalb und unterhalb des Fischkörpers (14) jeweils eine Rolle (11, 12; 27) angeordnet ist.

3. Vorrichtung nach Anspruch 1, **dadurch gekennzeichnet, daß** oberhalb des Fischkörpers (14) ein Rollenpaar (11, 12) und unterhalb des Fischkörpers (14) eine einzelne Rolle (27) angeordnet ist.

4. Vorrichtung nach Anspruch 1, **dadurch gekennzeichnet, daß** das Mittel aus zwei Rollenpaaren gebildet ist, wobei ein Rollenpaar oberhalb und ein anderes Rollenpaar unterhalb des Fischkörpers (14) angeordnet ist.

5. Vorrichtung nach einem der Ansprüche 1 bis 4, **dadurch gekennzeichnet, daß** mindestens die oder jede unterhalb des Fischkörpers (14) angeordnete Rolle (27) mittels einer Zugfeder (28) federbelastet ist.

6. Vorrichtung nach einem der Ansprüche 1 bis 5, **dadurch gekennzeichnet, daß** sämtliche Rollen (11, 12, 27) federbelastet sind.

7. Vorrichtung nach einem der Ansprüche 1 bis 6, **dadurch gekennzeichnet, daß** die oder jede Rolle (11, 12, 27) antreibbar ist.

8. Vorrichtung nach einem der Ansprüche 1 bis 7, **dadurch gekennzeichnet, daß** die oder jede Rolle (11, 12, 27) an einem Hebelarm (15,16, 29) drehbar angeordnet ist.

9. Vorrichtung nach Anspruch 8, **dadurch gekennzeichnet, daß** sich die Drehachse (40, 41, 42) der oder jeder Rolle (11, 12, 27) im wesentlichen parallel zur Längsachse des Fisches erstreckt.

10. Vorrichtung nach Anspruch 8, **dadurch gekennzeichnet, daß** jede Rolle (11, 12, 27) mittels des Hebelarms (15, 16, 29) zusätzlich schwenkbar um einen Schwenkpunkt (17, 30) ausgebildet ist.

11. Vorrichtung nach einem der vorhergehenden Ansprüche 1 bis 10, **dadurch gekennzeichnet, daß** die oder jede Rolle (11, 12, 27) im Randbereich über den gesamten Umfang scharfkantig ausgebildet ist.

12. Vorrichtung nach Anspruch 11, **dadurch gekennzeichnet, daß** die scharfe Kante (24) rampenartig nach innen verläuft.

13. Vorrichtung nach einem der vorhergehenden Ansprüche 1 bis 12, **dadurch gekennzeichnet, daß** die oder jede Rolle (11, 12, 27) schräg zum Fischkörper (14) angeordnet ist, derart, daß die durch die Rollen (11, 12, 27) aufgespannten Ebenen senkrecht zur Transportebene und schräg zur Längsachse des Fisches stehen.

14. Vorrichtung nach einem der vorhergehenden Ansprüche 3 bis 12, **dadurch gekennzeichnet, daß** die zwei Rollen (11, 12) oberhalb des Fischkörpers (14) in Transportrichtung und in Längsrichtung des Fischkörpers (14) versetzt zueinander angeordnet sind.

15. Vorrichtung nach einem der vorhergehenden Ansprüche 1 bis 14, **dadurch gekennzeichnet, daß** die oder jede Rolle (11, 12, 27) vom Kopf (26) des Fisches aus gesehen hinter der Brustflosse (25) auf dem Fischkörper (14) aufliegt.

16. Vorrichtung nach einem der vorhergehenden Ansprüche 1 bis 15, **dadurch gekennzeichnet, daß** die äußere Kontur des Fischkörpers (14) mit der oder jeder Rolle (11, 12, 27) abfahrbar ist.

17. Verfahren zum Aufrichten und/oder Führen von Flossen, insbesondere Brustflossen (25), als Vorbereitung zur nachfolgenden Fischbe- bzw. verarbeitung, wobei die Fische in entsprechenden Mulden auf der Seite liegend im wesentlichen quer zu ihrer Längserstreckung transportiert werden, **dadurch gekennzeichnet, daß** die Brustflossen (25) der Fische vor der eigentlichen Bearbeitung durch mindestens eine Rolle (11, 12, 27) vom Fischkörper (14) gelöst und aufgerichtet werden, indem die Rolle die Kontor der Fischkörper (14) in Transportrichtung abführt.

18. Verfahren nach Anspruch 17, **dadurch gekennzeichnet, daß** die Fischkörper (14) zwischen den zu beiden Seiten des Fischkörpers (14) angeordneten Rollen (11, 12; 27) transportiert werden.

19. Verfahren nach Anspruch 17 oder 18, **dadurch gekennzeichnet, daß** die Rollen (11, 12, 27) durch die Transportbewegung der Fischkörper (14) angetrieben werden.

20. Verfahren nach einem der Ansprüche 17 bis 19, **dadurch gekennzeichnet, daß** die Brustflossen (25), die am Fischkörper (14) anliegen, durch die Rollen (11, 12, 27) nach oben gezogen und aufgerichtet werden.

21. Verfahren nach einem der Ansprüche 17 bis 20, **dadurch gekennzeichnet, daß** mindestens die Rollen (11, 12) auf der Oberseite (13) der Fischkörper (14) mittels Schwerkraft auf dem Fischkörper (14) aufliegen.

22. Verfahren nach einem der Ansprüche 17 bis 21, **dadurch gekennzeichnet, daß** die oder jede unterhalb des Fischkörpers (14) angeordnete Rolle (27) durch Federkraft in dem Bereich der Transportebene gehalten wird.

23. Verfahren nach einem der Ansprüche 17 bis 22, **dadurch gekennzeichnet, daß** die Brustflossen (25) nach dem Aufrichten an nachfolgende Führungselemente übergeben werden.

24. Verfahren nach einem der Ansprüche 16 bis 23, **dadurch gekennzeichnet, daß** die Steuerung der Rollen (11, 12, 27) durch die Fischkörper (14) selbst erfolgt.

## Claims

1. Apparatus for setting fins upright and/or guiding them, in particular pectoral fins (25), in fish treatment and processing machines in which the fish are transported substantially transversely to their longitudinal extent and lying on their side in a trough, including means for releasing and/or lifting the pectoral fins (25) off the fish's body (14), in such a way that the pectoral fins (25) can be set upright for subsequent positioning and guiding by means of the roots of the pectoral fins (25), **characterised in that** the means is composed of at least one roller (11, 12, 27) which travels over the fish's contour in the direction of transport.

2. Apparatus according to claim 1, **characterised in that** above and below the fish's body (14) is arranged in each case a roller (11, 12; 27).

3. Apparatus according to claim 1, **characterised in that** above the fish's body (14) is arranged a pair of rollers (11, 12) and below the fish's body (14) is arranged a' single roller (27).

4. Apparatus according to claim 1, **characterised in that** the means is composed of two pairs of rollers, one pair of rollers being arranged above the fish's body (14) and another pair of rollers below it.

5. Apparatus according to any of claims 1 to 4, **characterised in that** at least the or each roller (27) arranged below the fish's body (14) is spring-loaded by means of a tension spring (28).

6. Apparatus according to any of claims 1 to 5, **characterised in that** all the rollers (11, 12, 27) are spring-loaded.

7. Apparatus according to any of claims 1 to 6, **characterised in that** the or each roller (11, 12, 27) is drivable.

8. Apparatus according to any of claims 1 to 7, **characterised in that** the or each roller (11, 12, 27) is arranged rotatably on a lever arm (15, 16, 29).

9. Apparatus according to claim 8, **characterised in that** the axis of rotation (40, 41, 42) of the or each roller (11, 12, 27) extends substantially parallel to the longitudinal axis of the fish.

10. Apparatus according to claim 8, **characterised in that** each roller (11, 12, 27) is designed to be additionally pivotable about a pivot point (17, 30) by means of the lever arm (15, 16, 29).

11. Apparatus according to any of the preceding claims 1 to 10, **characterised in that** the or each roller (11, 12, 27) is sharp-edged over the whole circumference in the edge' region.

12. Apparatus according to claim 11, **characterised in that** the sharp edge (24) runs inwardly after the fashion of a ramp.

13. Apparatus according to any of the preceding claims 1 to 12, **characterised in that** the or each roller (11, 12, 27) is arranged obliquely to the fish's body (14), in such a way that the planes spanned by the rollers (11, 12, 27)are perpendicular to the plane of transport and oblique to the longitudinal axis of the fish.

14. Apparatus according to any of the preceding claims 3 to 12, **characterised in that** the two rollers (11, 12) above the fish's body (14) are offset from each other in the direction of transport and in the longitudinal direction of the fish's body (14).

15. Apparatus according to any of the preceding claims 1 to 14, **characterised in that** the or each roller (11, 12, 27) rests on the fish's body (14) behind the pectoral fin (25), seen from the head (26) of the fish.

16. Apparatus according to any of the preceding claims 1 to 15, **characterised in that** the or each roller (11, 12, 27) can travel over the outer contour of the fish's body (14).

17. Method for setting fins upright and/or guiding them, in particular pectoral fins (25), in preparation for subsequent fish treatment or processing, wherein the fish are transported substantially transversely to their longitudinal extent and lying on their sides in suitable troughs, **characterised in that** the pectoral fins (25) of the fish are released from the fish's body (14) and set upright by at least one roller (11, 12, 27) before actual treatment by the fact that the roller travels over the contour of the fish's bodies (14) in the direction of transport.

18. Method according to claim 17, **characterised in that** the fish's bodies (14) are transported between the rollers (11, 12; 27) arranged on both sides of the fish's body (14).

19. Method according to claim 17 or 18, **characterised in that** the rollers (11, 12, 27) are driven by the transport. movement of the fish's bodies (14).

20. Method according to any of claims 17 to 19, **characterised in that** the pectoral fins (25) which lie against the fish's body (14) are pulled up and set upright by the rollers (11, 12, 27).

21. Method according to any of claims 17 to 20, **characterised in that** at least the rollers (11, 12) on the upper side (13) of the fish's bodies (14) rest on the fish's body (14) by force of gravity.

22. Method according to any of claims 17 to 21, **characterised in that** the or each roller (27) arranged' below the fish's body (14) is kept by spring force in the region of the plane of transport.

23. Method according to any of claims 17 to 22, **characterised in that** after being set upright the pectoral fins (25) are delivered to subsequent guide elements.

24. Method according to any of claims 16 to 23, **characterised in that** control of the rollers (11, 12, 27) is effected by the fish's bodies (14) themselves.

## Revendications

1. Dispositif d'orientation et/ou de guidage de nageoires, en particulier de nageoires pectorales (25), dans des machines de fabrication resp. d'usinage de poissons dans lesquelles les poissons sont transportés sensiblement transversalement à leur extension longitudinale en étant couchés sur le côté dans une cavité, ledit dispositif comportant un moyen pour détacher et/ou soulever les nageoires pectorales (25) du corps (14) du poisson de sorte que les nageoires pectorales (25) peuvent être orientées en vue d'un positionnement et d'un guidage subséquent par les racines des nageoires pectorales (25), **caractérisé en ce que** le moyen est constitué d'au moins un rouleau (11, 12, 27) qui suit le contour du poisson dans la direction de transport.

2. Dispositif selon la revendication 1, **caractérisé en ce qu'**un rouleau (11, 12 ; 27) est disposé au-dessus et au-dessous du corps (14) du poisson.

3. Dispositif selon la revendication 1, **caractérisé en ce qu'**une paire de rouleaux (11, 12) est disposée au-dessus du corps (14) du poisson et un rouleau unique (27) est disposé au-dessous du corps (14) du poisson.

4. Dispositif selon la revendication 1, **caractérisé en ce que** le moyen est constitué de deux paires de rouleaux, une paire de rouleaux est disposée au-dessus du corps du poisson et une autre paire de rouleaux est disposée au-dessous du corps (14) du poisson.

5. Dispositif selon l'une des revendications 1 à 4, **caractérisé en ce que** au moins le rouleau ou chaque rouleau (27) disposé au-dessous du corps (14) du poisson est contraint élastiquement par un ressort de traction (28).

6. Dispositif selon l'une des revendications 1 à 5, **caractérisé en ce que** l'ensemble des rouleaux (11, 12, 27) est contraint élastiquement.

7. Dispositif selon l'une des revendications 1 à 6, **caractérisé en ce que** le rouleau ou chaque rouleau (11, 12, 27) est apte à être entraîné.

8. Dispositif selon l'une des revendications 1 à 7, **caractérisé en ce que** le rouleau ou chaque rouleau (11, 12, 27) est monté à rotation sur le bras de levier (15, 16, 29).

9. Dispositif selon la revendication 8, **caractérisé en ce que** l'axe de rotation (40, 41, 42) du rouleau ou de chaque rouleau (11, 12, 27) s'étend sensiblement parallèlement à l'axe longitudinal du poisson.

10. Dispositif selon la revendication 8, **caractérisé en ce que** chaque rouleau (11, 12, 27) est conformé de façon à pouvoir pivoter en plus autour d'un point de pivotement (17, 30) au moyen du bras de levier (15, 16, 29).

11. Dispositif selon l'une des revendications précédentes 1 à 10, **caractérisé en ce que** le rouleau ou chaque rouleau (11, 12, 27) est conformé pour avoir des bords vifs sur toute la circonférence.

12. Dispositif selon la revendications 11, **caractérisé en ce que** le bord vif (24) s'étend vers l'intérieur à la manière d'une rampe.

13. Dispositif selon l'une des revendications précédentes 1 à 12, **caractérisé en ce que** le rouleau ou chaque rouleau (11, 12, 27) est disposé en étant incliné par rapport au corps (14) du poisson de sorte que les plans passant par les rouleaux (11, 12, 27) sont perpendiculaires au plan de transport et inclinés par rapport à l'axe longitudinal du poisson.

14. Dispositif selon l'une des revendications précédentes 3 à 12, **caractérisé en ce que** les deux rouleaux (11, 12) sont disposés au-dessus du corps (14) du poisson en étant décalés dans la direction longitudinale et dans la direction transversale du corps (14) du poisson.

15. Dispositif selon l'une des revendications précédentes 1 à 14, **caractérisé en ce que** le rouleau ou chaque rouleau (11, 12, 27) repose sur le corps (14) du poisson en arrière de la nageoire pectorale (25) par référence à la tête (26) du poisson.

16. Dispositif selon l'une des revendications précédentes 1 à 15, **caractérisé en ce que** le contour extérieur du corps (14) du poisson est parcouru par le rouleau ou chaque rouleau (11, 12, 27).

17. Procédé d'orientation et/ou de guidage de nageoires, en particulier de nageoires pectorales (25), en préparation de la fabrication resp. le façonnage subséquent de poissons, dans lequel les poissons sont transportés sensiblement transversalement à leur extension longitudinale en étant couchés sur le côté dans une cavité appropriée, **caractérisé en ce que** les nageoires pectorales (25) des poissons sont détachées et orientées du corps du poisson avant le façonnage proprement dit par au moins un rouleau (11, 12, 27) en faisant suivre par le rouleau le contour du corps (14) du poisson dans la direction de transport.

18. Dispositif selon la revendication 17, **caractérisé en ce que** les corps de poisson (14) sont transportés entre les rouleaux (11, 12 ; 27) disposés des deux côtés du corps (14) du poisson.

19. Procédé selon la revendication 17 ou 18, **caractérisé en ce que** les rouleaux (11, 12, 27) sont entraînés par le mouvement de transport du corps (14) du poisson.

20. Procédé selon l'une des revendications 17 à 19, **caractérisé en ce que** les nageoires pectorales (25), qui reposent sur le corps (14) du poisson, sont tirées vers le haut et orientées par les rouleaux (11, 12, 27).

21. Procédé selon l'une des revendications 17 à 20, **caractérisé en ce que** les rouleaux (11, 12) au moins reposent par gravité sur le corps (14) du poisson sur la face supérieure (13) des corps de poisson (14).

22. Procédé selon l'une des revendications 17, à 21, **caractérisé en ce que** le rouleau ou chaque rouleau (27) disposé au-dessous du corps (14) du poisson est maintenu par la force exercée par un ressort au niveau du plan de transport.

23. Procédé selon l'une des revendications 17 à 22, **caractérisé en ce que** les nageoires pectorales (25) sont transférées aux éléments de guidage suivants après l'orientation.

24. Procédé selon l'une des revendications 16 à 23, **caractérisé en ce que** la commande des rouleaux (11, 12, 27) est effectuée par le corps (14) du poisson lui-même.
